# EUROPÄISCHE PATENTSCHRIFT

(11) **EP 1 473 078 B1**
(45) Veröffentlichungstag und Bekanntmachung des Hinweises auf die Patenterteilung: **07.11.2007**
(21) Anmeldenummer: 04008038.4
(22) Anmeldetag: 02.04.2004
(51) Int. Cl.: B01F 15/00, B01F 7/00, B01F 7/06, A01C 3/02, C02F 11/04, F04D 29/18, F04D 29/20, C12M 1/02

(54) **Biogasanlagen-Tauchmotorrührgerät**
Submersible motorised stirrer for biogas installations
Agitateur submersible motorisé pour installations de production d'un biogaz

(30) Priorität: 02.05.2003 DE 20306759 U
(43) Veröffentlichungstag der Anmeldung: 03.11.2004
(73) Patentinhaber: U.T.S. Umwelt-Technik-Süd GmbH, 84419 Obertaufkirchen (DE)
(72) Erfinder: Bürger, Adam, 84405 Grüntegernbach (DE)
(74) Vertreter: Neubauer, Hans-Jürgen

(56) Entgegenhaltungen:
- DE-A1- 10 010 672
- DE-C- 654 034
- DE-C1- 19 517 901
- DE-U1- 20 306 759
- DE-U1- 29 502 974
- US-A- 4 468 130
- US-A- 4 721 394
- US-A- 5 076 760

## Beschreibung

Die Erfindung betrifft ein Biogasanlagen-Tauchmotorrührgerät nach dem Oberbegriff des Anspruchs 1.

Ein bekanntes, gattungsgemäßes Biogasanlagen-Tauchmotorrührgerät (DE 100 10 672 A1) besteht aus einem Motorgehäuse, in dem ein Antriebsmotor enthalten ist, dessen Motorwelle als Rührwelle dicht aus dem Motorgehäuse geführt ist. Weiter umfasst das Rührgerät einen Rührer, der aus einer Nabe und damit verbundenen, wenigstens zwei Rührflügeln besteht, wobei die Nabe auf die Motorwelle aufgesteckt und mit dieser drehfest verbunden ist.

In allgemein bekannter Weise sind die Nabe und die Rührflügel aus dem gleichen Material hergestellt und die Rührflügel sind auf die Nabe mit einer Schrägstellung zur Nabenachse aufgeschweißt.

Solche Biogasanlagen-Tauchmotorrührgeräte werden in einen Fermenter der Biogasanlage und in dessen Flüssigkeitsinhalt abgesenkt. Diese Flüssigkeit ist regelmäßig Gülle, der zur Erhöhung der Biogasausbeute z. T. erhebliche Mengen von organischen Feststoffen, wie z. B. Festmist, Hühnertrockenkot, Grasschnitt, Rübenblätter, Obsttrester, Gemüsereste etc., zugefügt wird. Für einen effektiven und kontinuierlichen Gärprozessverlauf ist es erforderlich, diese feststoffhaltige Flüssigkeit zu durchmischen, umzuwälzen und ggf. zu zerkleinem, da sich sonst insbesondere ungünstige Schwimm- und Sinkschichten ausbilden können.

Biogasanlagen-Tauchmotorrührgeräte sind durch die Art des feststoffhaltigen Misch- und Rührguts in Verbindung mit ihrer Zerkleinerungsfunktion starken Belastungen ausgesetzt und speziell an den rauhen Betrieb in einem Fermenter angepasst. Es treten dabei aber regelmäßig Verschleißprobleme an den Rührflügeln der Rührer auf, besonders wenn stark abrasive Medien im Fermenter gerührt werden müssen.

Bei einem erkennbaren Nachlassen der Rühr- und Mischleistung eines Biogasanlagen-Tauchmotorrührgeräts war es daher bisher erforderlich den Fermenter im Bereich des Rührgeräts zu öffnen und dieses nach oben über die Flüssigkeitsoberfläche herauszufahren. Anschließend wurde die Nabe des Rührers gelöst und der Rührer von der Motorwelle abgenommen und durch einen insgesamt neuen Rührer mit Nabe und angeschweißten Rührflügeln setzt.

Ein durch Verschleiß beschädigter Rührer konnte ggf. dergestalt repariert werden, dass die verschlissenen Rührflügel an der Schweißnaht von der Nabe getrennt wurden und auf dieselbe Nabe wieder neue Rührflügel aufgeschweißt wurden. Eine solche Rührerreparatur konnte wegen der erforderlichen Schweißarbeiten keinesfalls im Explosionsschutzbereich des Fermenters am herausgehobenen Rührgerät vorgenommen werden. Es war daher zwingend erforderlich, den gesamten Rührer mitsamt der Nabe von der Motorwelle abzunehmen und den verschlissenen Rührer außerhalb des Explosionsschutzbereichs in einer Werkstatt zu reparieren. Zudem wickeln sich regelmäßig Feststoffe zwischen Nabe und Gehäuse um die Motorwelle. Beim Abnehmen des kompletten Rührers wurde durch diese Feststoffe regelmäßig auch die Wellendichtung am Motorgehäuse bzw. zu einem Getriebe hin zerstört, so dass die Wellendichtung bei einem Rührertausch ebenfalls aufwendig erneuert werden musste. Die hier auftretenden Verschleißprobleme der Rührer in Verbindung mit den Austauschproblemen, insbesondere in Verbindung mit den Explosionsschutzproblemen sind somit biogasanlagenspezifsch.

Weiter ist eine Rühreinrichtung bekannt (US-A-4468130), bei der eine Rührwelle von oben her in einen Behälter ragt und über ein Getriebe und einen Elektromotor, welche auf einem Behälterdeckel angebracht sind, angetrieben wird. Am freien Wellenende ist ein Rührer bestehend aus einer Nabe und damit verbundenen drei Rührflügeln befestigt. Die Rührflügel sind mit der Nabe über Adapterböcke verbunden, welche sowohl mit der Nabe als auch mit den blattförmigen Rührflügeln verschraubt sind. Die Rührflügel sind gewölbt und in sich verdreht, was eine relativ aufwendige Herstellung bedingt. Durch diese Rührflügelgeometrie soll bei vertikaler Rührwelle und einer Drehung der Rührflügel in einer Horizontalebene in der zu rührenden Flüssigkeit eine sogenannte Tumbleströmung ausgebildet werden. Eine solche Anordnung und Strömung ist für Rühraufgaben im Fermenter einer Biogasanlage wenig geeignet - die dort verwendeten Biogasanlagen-Tauchmotorrührgeräte haben regelmäßig horizontal ausgerichtete Antriebswellen, wobei sich die Rührflügel in einer Vertikalebene drehen, und sind zudem in ihrer Höhenlage verstellbar. Die gezeigten Adapterböcke im Stand der Technik sind stark strukturiert mit vorspringenden Ecken und Kanten, wodurch sich eine solche Konstruktion für einen Einsatz im Fermenter einer Biogasanlage nicht eignet - es besteht die Gefahr, dass sich langstielige, langfaserige und verzopfende Biomassefeststoffe anlagern und verklumpen, wodurch die Rührleistung erheblich reduziert wird.

Die Aufgabe der Erfindung wird daher darin gesehen ein gattungsgemäßes Biogasanlagen-Tauchmotorrührgerät so weiterzubilden, dass damit dem Rührer-Verschleißproblem durch einen einfach und kostengünstig aufgebauten und für die Rührfunktion in einem Fermenter einer Biogasanlage effektiv arbeitenden Rührer, mit weniger Aufwand begegnet werden kann.

Diese Aufgabe wird mit den Merkmalen des Anspruchs 1 gelöst.

Gemäß Anspruch 1 sind die wenigstens zwei Rührflügel jeweils mit einem nabenseitigen Rührflügelrandbereich durch lösbare Schraubverbindungen mit der Nabe verbunden.

Damit wird erreicht, dass bei einem Rührflügelverschleiß anstelle des kompletten Rührers vor Ort lediglich die verschlissenen Rührflügel gegen neue Rührflügel auswechselbar sind. Die praktisch nicht verschleißgefährdete Nabe kann ständig auf der Motorwelle verbleiben und braucht bei einem Rührflügelaustausch nicht abgenommen zu werden. Dies ergibt einerseits einen Materialkostenvorteil, da die Nabe weiterverwendet wird und zudem besteht nicht die Gefahr, dass die Wellenabdichtung beschädigt wird. Weiter kann vorteilhaft der Rührflügelaustausch über lösbare Verbindungsmittel problemlos im Explosionsschutzbereich des Fermenters unmittelbar am angehobenen Rührgerät erfolgen, wobei dies auch durch Hilfskräfte, insbesondere ohne Schweißkenntnisse schnell durchführbar ist. Dadurch werden die Arbeitskosten erheblich reduziert.

Bei den bisherigen geschweißten Rührern war ein wesentliches Auswahlkriterium für das Rührflügelmaterial die Schweißbarkeit mit der üblicherweise aus gleichem Material hergestellten Nabe. Besonders harte und verschleißarme Materialien für die Rührflügel konnten daher nicht oder nur eingeschränkt verwendet werden. Vorteilhaft können dagegen beim erfindungsgemäßen Rühreraufbau die Nabe und die Rührflügel aus unterschiedlichen Materialien hergestellt sein, wobei insbesondere die nur wenig verschleißgefährdete Nabe aus bisher üblichen Materialien und die Rührflügel dagegen aus wesentlich härterem, verschleißarmen Material hergestellt sein können und über die lösbaren Verbindungsmittel zusammen montiert werden können. Durch diese Materialwahl bei den Rührflügeln ist der Rührflügelverschleiß insgesamt wesentlich geringer als bisher und ein Austausch der Rührflügel kann im Vergleich zum bisherigen gesamten Rühreraustausch in größeren Zeitabständen erfolgen. Auch daher sind die Arbeitskosten und Materialkosten reduziert. Zudem muss auch der Fermenter zum Herausheben des Rührgeräts weniger oft mit dem zwangsläufig verbundenen Gasverlust geöffnet werden, so dass der Gasverlust insgesamt geringer und die gasbedingte elektrische Stromerzeugung vorteilhaft höher wird. Die verwendeten Schraubverbindungen sind einfach und schnell mit entsprechenden Werkzeugen auch im Explosionsschutzbereich lösbar und wieder montierbar.

Zudem sind nach Anspruch 1 an der Nabenaußenseite, insbesondere an der Mantelfläche einer zylindrischen Nabe sind radial abstehende, jeweils einem Rührflügel zugeordnete Haltestege fest angebracht, mit denen jeweils einer der wenigstens zwei Rührflügel lösbar verbunden ist. Dadurch ergibt sich eine einfache stabile Befestigungsmöglichkeit, wobei an den Rührflügeln und den Haltestegen zugeordnete, fluchtende, achsparallele Bohrungen für die Schraubverbindungen angebracht werden können.

Zudem sind in dieser Anordnung die Haltestegabschnitte an der Nabe radial gegenüberliegend angebracht und liegen jeweils mit einer Rührflügel-Anlagefläche bezüglich der Achsrichtung der Nabe in schräggestellten Schrägebenen, die gegeneinander gestellt sind, bevorzugt so schräg gestellt sind, dass sich für beide gegenüberliegenden Rührflügel bezüglich einer Drehrichtung die selbe Schrägstellung ergibt. Die Haltestegabschnitte bilden somit hier keine komplizierte Schraubenlinie und können ebene gerade RührRügel-Arliagenfiächen aufweisen, so dass auch die Rührflügel zumindest in den Anlagebereichen aus ebenem Plattenmaterial oder Blechmaterial herausgeschnitten werden können. Damit ist die Rührflügelherstellung und die Befestigung einfach und kostengünstig durchführbar. Zudem wird die Schrägstellung der Rührflügel bezüglich der Nabenachsrichtung durch die Schrägstellung der Haltestegabschnitte festgelegt und bleibt auch bei einem Rührflügelaustausch ohne zusätzliche Maßnahmen erhalten.

Jeder Rührflügel ist als Rührblatt einfach und kostengünstig aus einem ebenen Plattenmaterial ohne komplizierte Raumformen hergestellt und kann mit zumindest abschnittweise ebenen Flächenbereichen und Anlageflächen ausgeführt sein, wobei jeweils der hintere Randbereich des Rührflügels um eine radiale Biegekante in Richtung der vorderen freien Nabenstirnseite zu einer Schrägblattleiste aufgekantet ist. Dies ergibt eine besonders einfache und kostengünstige Ausbildung eines Rührflügels, der zudem einfach austauschbar ist.

In einer bevorzugten konstruktiv einfachen und kostengünstigen Ausführungsform nach Anspruch 2 kann dabei jeder von zwei Rührflügeln mit einem nabenseitigen, der Nabengestalt angepassten Beschnitt die Nabe etwa zur Hälfte umfassen. Die äußere Kontur eines Rührflügels verläuft ausgehend von der Nabe mit einem bezüglich der Drehrichtung der Motorwelle vorderen Randbereich etwa radial und anschließend erstreckt sich die Kontur in einem sich vergrößernden Bogen bis zur maximalen Rührflügellänge und verläuft von dort mit einem bezüglich der Drehrichtung hinteren Randbereich wiederum radial zur Nabe. Die vorstehend beschriebenen Rührflügelausführungen sind ersichtlich aus einem ebenen Plattenmaterial nur durch einen Randbeschnitt und ggf. eine Kantung einfach und schnell herstellbar. Da weder komplizierte Flächenformen noch Schweißungen erforderlich sind, kann gezielt ohne Kompromisse ein besonders verschleißarmes, hartes Material gewählt werden, so dass von vorneherein nur ein geringer Rührflügelverschleiß gegeben ist.

Für die Rührflügelausbildung mit der aufgekanteten Schrägblattleiste ist es nach Anspruch 3 vorteilhaft, dass die Rührflügel-Anlagefläche in ihrer Gestalt auch im Bereich der Schrägblattleiste für deren Anlage angepasst ist.

Für eine besonders stabile Abstützung der Rührflügel an der Nabe können gemäß Anspruch 4 auch zwei Haltestege oder Haltestegabschnitte im Abstand einer Rührflügelmaterialstärke nebeneinander angeordnet sein, so dass dadurch ein Aufnahmespalt für einen nabenseitigen Rührtlügelrand gebildet ist. Die Abstützung erfolgt dann im Aufnahmespalt über die beiden Haltestege, wobei die lösbaren Verbindungsmittel hier im wesentlichen nur der Halterung der Rührflügel dienen und die Krafteinleitung über die Haltestege erfolgt. Zweckmäßig erfolgt auch hier die Verbindung über durchgehende fluchtende Bohrungen mit durchgesteckten Schraubenbolzen und Schraubenmuttern.

Anhand einer Zeichnung wird die Erfindung näher erläutert.

Es zeigen:
- Fig. 1: eine schematische Seitenansicht eines erfindungsgemäßen Rührers,
- Fig. 2: eine schematische Draufsicht des Rührers,
- Fig. 3: eine schematische Seitenansicht einer Nabe des Rührers,
- Fig. 4: eine schematische Draufsicht der Nabe,
- Fig. 5: eine schematische Draufsicht eines Rührflügels des Rührers, und
- Fig. 6: eine schematische Seitenansicht des Rührflügels.

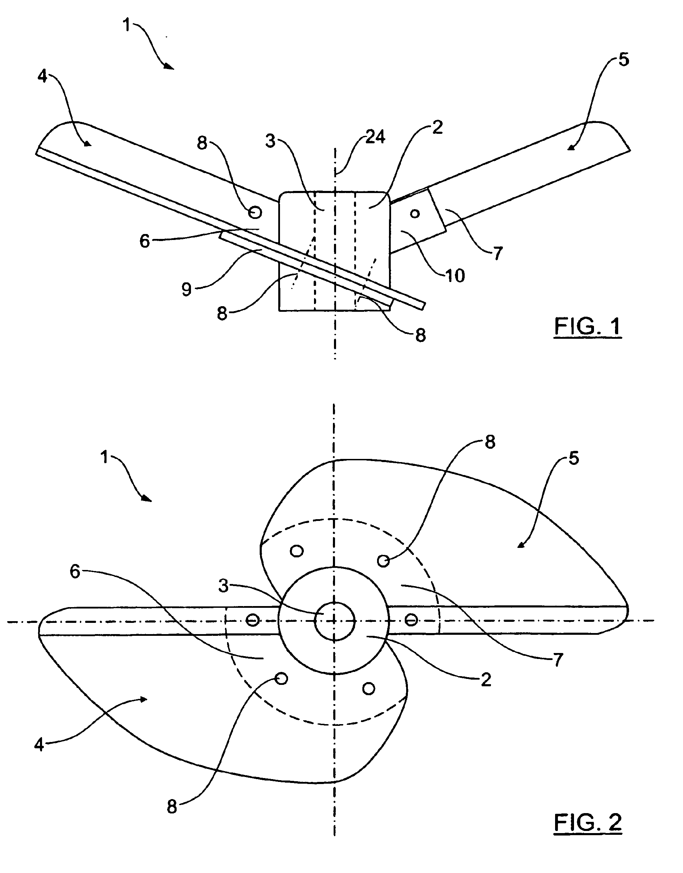

In Fig. 1 ist schematisch eine Seitenansicht eines Rührers 1 für ein Biogasanlagen-Tauchmotorrührgerät dargestellt. Der Rührer 1 umfasst eine Nabe 2, die auf eine von einem hier nicht mit dargestellten Antriebsmotor angetriebene Motorwelle als Rührwelle drehfest aufgesteckt und verbunden werden kann. Für eine einfache Montage des Rührers 1 an der Rührwelle ist in der Nabe die Aufnahme für die Rührwelle dementsprechend als Durchgangsbohrung 3 ausgeführt. Des weiteren sind zwei Rührflügel 4 und 5 Bestandteile des Rührers 1. Die Rührflügel 4 und 5 sind jeweils mit einem nabenseitigen Rührflügelrandbereich 6 und 7 durch Schraubverbindungen 8 mit der Nabe 2 lösbar verbunden. Die Schraubverbindungen 8 sind in Fig. 1 teilweise nur schematisch als strichpunktierte Linien eingezeichnet. An der Nabenaußenseite sind zwei den beiden Rührflügeln 4 und 5 jeweils zugeordnete Haltestegabschnitte 9 und 10 angebracht, an die die beiden Rührflügel 4 und 5 mittels den Schraubverbindungen 8 angeschraubt sind. Die Haltestegabschnitte sind dabei, wie dies aus der schematischen Draufsicht des Rührers 1 in Fig. 2 zu erkennen ist, radial gegenüberliegend angebracht und liegen, wie dies aus der Seitenansicht in Fig. 1 ersichtlich ist, bezüglich der Achsrichtung 24 in gegeneinander schräg gestellten Schrägebenen. Somit ergibt sich für die beiden gegenüberliegenden Rührflügel 4 und 5 bezüglich einer Drehrichtung des Rührers 1 dieselbe Schrägstellung. Aufgrund dieser Anordnung der Haltestegabschnitte 9 und 10 weisen diese gerade Rührflügel-Anlageflächen auf, so dass die Rührflügel 4 und 5 wenigstens in den nabenseitigen Rührflügelrandbereichen 6 und 7 an den Haltestegabschnitten 9 und 10 aus einem ebenen Plattenmaterial oder Blechmaterial herausgeschnitten werden können.

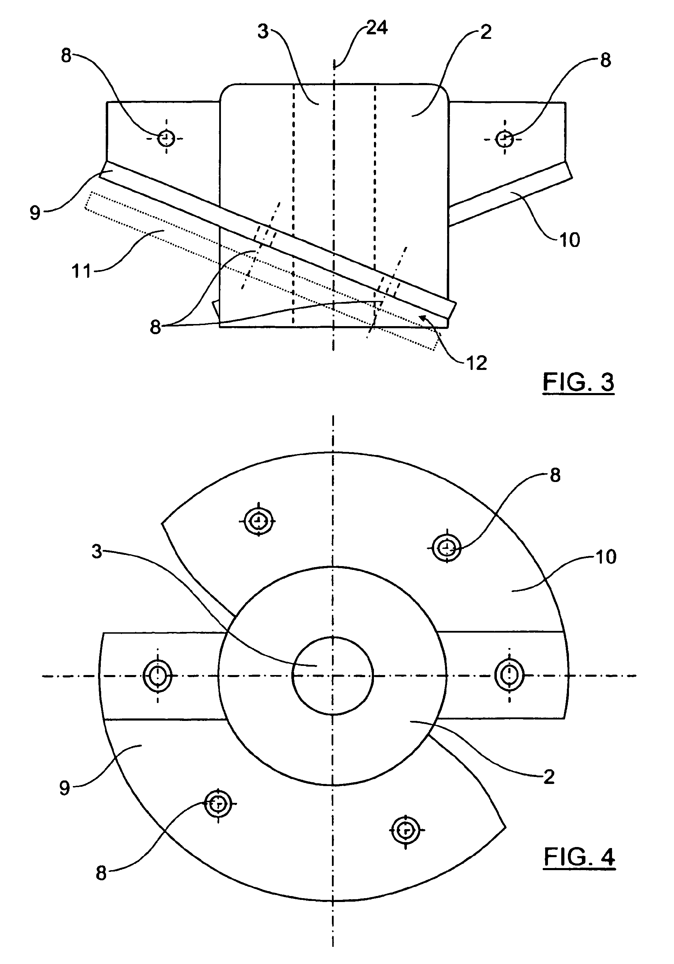

In den Fig. 3 und 4 ist die Nabe 2 schematisch in einer Seitenansicht bzw. in einer Draufsicht dargestellt. Dabei ist die ebene und gerade verlaufende Rührflügel-Anlagefläche der Haltestegabschnitte 9 und 10 zu erkennen. Somit ist die Schrägstellung der Rührflügel 4 und 5 bezüglich der Nabenachsrichtung durch die Schrägstellung der Haltestegabschnitte 9 und 10 festgelegt. Werden beispielsweise verschleißbedingt die Rührflügel 4 und 5 gegen neue Rührflügel ausgetauscht, so ist die Schrägstellung aufgrund der schräg angeordneten Haltestegabschnitte auch für die neu zu montierenden Rührflügel fix vorgegeben. Ist eine besonders stabile Abstützung der Rührflügel 4 und 5 an der Nabe 2 notwendig, so kann jedem Haltestegabschnitt 9 und 10 im Abstand einer Rührflügelmaterialstärke ein weiterer Haltestegabschnitt 11, der in Fig. 3 punktiert schematisch eingezeichnet ist, zugeordnet werden, so dass dadurch ein Aufnahmespalt 12 jeweils für den nabenseitigen Rührflügelrandbereich 6 und 7 gebildet ist. Somit erfolgt die Abstützung im Aufnahmespalt 12 über die beiden Haltestegabschnitte 9 und 11, so dass die lösbaren Schraubverbindungen 8 nur zur Halterung der Rührflügel 4 und 5 dienen und die Krafteinleitung über die Haltestegabschnitte 9 und 11 erfolgt.

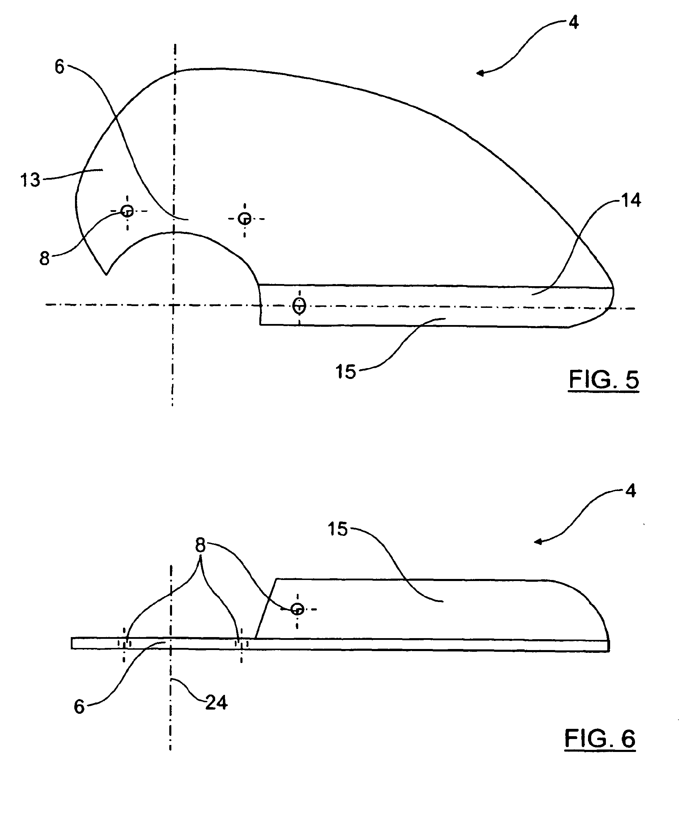

In den Fig. 5 und 6 ist schematisch in einer Draufsicht bzw. in einer Seitenansicht der Rührflügel 4 dargestellt. Der Rührflügel 4 ist dabei beispielhaft nicht nur im nabenseitigen Rührflügelrandbereich 6, sondern vollständig eben ausgeführt, so dass eine einfache und kostengünstige Herstellung des Rührflügels 4 möglich ist. Die äußere Kontur des Rührflügels 4 verläuft ausgehend von der Nabe 2 (hier nicht mit dargestellt) mit einem bezüglich der Drehrichtung der Motorwelle vorderen Randbereich 13 etwa radial und erstreckt sich anschlie-ßend in einem sich vergrößernden Bogen bis zur maximalen Rührflügellänge und verläuft von dort mit einem bezüglich der Drehrichtung hinteren Randbereich 14 wiederum radial zur Nabe 2. Der hintere Randbereich 14 des Rührflügels 4 ist dabei um eine radiale Biegekante in Richtung der vorderen freien Nabenstirnseite zu einer Schrägblattleiste 15 aufgekantet. Für eine Anlage der Schrägblattleiste 15 ist die Rührflügel-Anlagefläche an der Nabe 2 der Leistenschräge angepasst. Am nabenseitigen Rührflügelrandbereich 6 ist der Rührflügel 4 so beschnitten, dass der Rührflügelrandbereich 6 der Nabengestalt angepasst ist und die Nabe 2 etwa zur Hälfte umfasst. Der Rührflügel 5 entspricht dem oben beschriebenen Aufbau des Rührflügels 4, der in den Fig. 5 und 6 als Einzelteil dargestellt ist, so dass am Rührer 1 zwei geometrisch gleiche Rührflügel 4 und 5 angeordnet sind.

Insgesamt kann der Rührflügel 4 bzw. 5 einfach und kostengünstig hergestellt werden und aufgrund der Schraubverbindungen 8 kann dieser einfach und funktionssicher an den mit der Nabe 2 verbundenen Haltestegabschnitten 9 und 10 angeschraubt werden. Dadurch ergibt sich ein Rührer 1, bei dem einfach und schnell im etwaigen Verschleißfall der Rührflügel 4 bzw. 5 diese gegen neue Rührflügel ausgetauscht werden können. Die Rührflügel 4 und 5 können dabei aus einem besonders harten und verschleißarmen Material hergestellt werden, da eine Materialgleichheit zur Nabe 2, wie beim gattungsgemäßen Stand der Technik, aufgrund einer fehlenden Schweißverbindung zwischen den Rührflügeln 4 und 5 und der Nabe 2 nicht notwendig ist. Zudem kann der Austausch der Rührflügel 4 und 5 im Explosionsschutzbereich eines Fermenters einer Biogasanlage durchgeführt werden, da vorteilhaft keine Schweißarbeiten für den Austausch der Rührflügel 4 und 5 notwendig sind.

## Patentansprüche

1. Biogasanlagen-Tauchmotorrührgerät
mit einem Motorgehäuse, in dem ein Antriebsmotor enthalten ist, dessen Motorwelle als Rührwelle dicht aus dem Motorgehäuse geführt ist, und
mit einem Rührer, der aus einer Nabe und damit verbundenen, wenigstens zwei Rührflügeln besteht, wobei die Nabe auf die Motorwelle aufgesteckt und mit dieser drehfest verbunden ist,
**dadurch gekennzeichnet,**
- **dass** die wenigstens zwei Rührflügel (4, 5; 17, 18) jeweils mit einem nabenseitigen Rührflügelrandbereich (6, 7; 21, 22) durch lösbare Schraubverbindungen (8; 23) mit der Nabe (2; 20) verbunden sind,
- **dass** an der Nabenaußenseite radial abstehende, jeweils einem Rührflügel (4, 5) zugeordnete Haltestege (9,10) fest angebracht sind, mit denen jeweils einer der wenigstens zwei zugeordneten Rührflügel (4, 5) lösbar verbunden ist,
- **dass** die Haltestegabschnitte (9, 10) an der Nabe (2) radial gegenüberliegend angebracht sind und jeweils wenigstens mit einer Rührflügel-Anlagefläche in bezüglich der Achsrichtung und gegeneinander schräggestellten Schrägebenen liegen, und
- **dass** jeder der Rührflügel (4, 5) als Rührblatt aus einer ebenen Platte hergestellt ist mit einem bezüglich der Drehrichtung hinteren Randbereich (14), der um eine radiale Biegekante in Richtung der vorderen freien Nabenstirnseite zu einer Schrägblattleiste (15) aufgekantet ist.

2. Biogasanlagen-Tauchmotorrührgerät nach Anspruch 1, **dadurch gekennzeichnet,**
- **dass** zwei Rührflügel (4, 5)vorgesehen sind, von denen jeder mit einem nabenseitigen, der Nabengestalt angepassten Beschnitt die Nabe etwa zur Hälfte umfasst, und
- **dass** die äußere Kontur jedes Rührflügels (4, 5) ausgehend von der Nabe (2) mit einem bezüglich der Drehrichtung der Motorwelle vorderen Randbereich (13) etwa radial verläuft und anschließend in einem sich vergrößernden Bogen bis zur maximalen Rührflügellänge erstreckt und von dort mit einem bezüglich der Drehrichtung hinteren Randbereich (14) wiederum radial zur Nabe (2) verläuft.

3. Biogasanlagen-Tauchmotorrührgerät nach Anspruch 1 oder 2, **dadurch gekennzeichnet,**
**dass** die Rührflügel-Anlagefläche für eine Anlage der Schrägblattleiste (15) im nabenseitigen Leistenbereich der Leistenschräge angepasst ist.

4. Biogasanlagen-Tauchmotorrührgerät nach einem der Ansprüche 1 bis 3, **dadurch gekennzeichnet,**
**dass** zwei Haltestege oder Haltestegabschnitte (9, 11) im Abstand einer Rührflügelmaterialstärke nebeneinander angeordnet sind, so dass **dadurch** ein Aufnahmespalt (12) für einen nabenseitigen Rührflügelrand gebildet ist.

## Claims

1. Submersible motorized stirring device for biogas installations
having a motor housing in which is contained a drive motor whose motor shaft as a stirring shaft is guided out of the motor housing in a sealed fashion, and
having a stirrer which is composed of a hub and, connected thereto, at least two stirring vanes, with the hub being plugged onto and rotationally fixedly connected to the motor shaft,
**characterized**
- **in that** the at least two stirring vanes (4, 5; 17, 18) are connected, in each case with a hub-side stirring vane edge region (6, 7; 21, 22), to the hub (2; 20) by means of detachable screw connections (8; 23),
- **in that** radially projecting holding webs (9, 10) which are in each case assigned to a stirring vane (4, 5) are fixedly attached to the hub outer side, to which holding webs (9, 10) is detachably connected in each case one of the at least two assigned stirring vanes (4, 5),
- **in that** the holding web sections (9, 10) are attached to the hub (2) radially opposite one another and lie, in each case at least with one stirring vane contact face, in inclined planes which are inclined with respect to the axis direction and with respect to one another, and
- **in that** each of the stirring vanes (4, 5) is produced as a stirring blade from a planar plate with a rear edge region (14) with respect to the rotational direction, which rear edge region (14) is angled up about a radial bending edge in the direction of the front free hub end side so as to form an inclined blade strip (15).

2. Submersible motorized stirring device for biogas installations according to Claim 1, **characterized**
- **in that** two stirring vanes (4, 5) are provided, each of which, with a hub-side trimmed section which is adapted to the hub shape, surrounds approximately half of the hub, and
- **in that** the outer contour of each stirring vane (4, 5), proceeding from the hub (2), runs approximately radially with a front edge region (13) with respect to the rotational direction of the motor shaft, and subsequently extends in a widening arc up to the maximum stirring vane length, and runs radially again to the hub (2) from there with a rear edge region (14) with respect to the rotational direction.

3. Submersible motorized stirring device for biogas installations according to Claim 1 or 2, **characterized**
**in that** the stirring vane contact face is adapted for contact of the inclined blade strip (15) in the hub-side strip region of the strip incline.

4. Submersible motorized stirring device for biogas installations according to one of Claims 1 to 3, **characterized**
**in that** two holding webs or holding web sections (9, 11) are arranged adjacent to one another with the spacing of a stirring vane material thickness, such that a receiving gap (12) for a hub-side stirring vane edge is thereby formed.

## Revendications

1. Agitateur submersible motorisé pour installations de production d'un biogaz
avec un boîtier de moteur dans lequel se trouve un moteur d'entrainement, dont l'arbre du moteur est guidé de manière étanche comme arbre d'agitation hors du boîtier du moteur, et
avec un agitateur, qui se compose d'un moyeu et d'au moins deux palettes d'agitation reliées à celui-ci, le moyeu étant placé sur l'arbre du moteur et relié à celui-ci de manière à résister à la torsion,
**caractérisé en ce que**,
- les deux palettes d'agitation au moins (4, 5; 17, 18) sont respectivement reliées avec une zone de bordure de palette d'agitation côté moyeu (6, 7; 21, 22) par des assemblages par vis amovibles (8 ; 23) avec le moyeu (2 ; 20) .
- des tiges de maintien (9, 10) s'écartant radialement sur le côté extérieur du moyeu, ajoutées respectivement à une palette d'agitation (4, 5) sont installées fixement, avec lesquelles respectivement une des au moins deux palettes d'agitation ajoutées (4, 5) est reliée de manière amovible,
- les segments des tiges de maintien (9, 10) sont montés sur le moyeu (2) radialement les uns par rapport aux autres et reposent respectivement au moins avec des surfaces d'installation de palette d'agitation dans des plans inclinés et inclinés les uns vers les autres par rapport au sens de l'axe, et
- chacune des palettes d'agitation (4, 5) est fabriquée comme une pâle d'agitation à partir d'une plaque plane avec une zone de bordure arrière (14) en ce qui concerne le sens de rotation, qui est posée sur chant autour d'une arête de flexion radiale dans le sens du côté frontal libre avant du moyeu vers un bord de pâle inclinée (15)

2. Agitateur submersible motorisé pour installations de production d'un biogaz selon la revendication 1, **caractérisé en ce que**,
- deux palettes d'agitation (4, 5) sont prévues, dont chacune comprend le moyeu à peu près pour moitié avec une coupe côté moyeu adaptée à la forme du moyeu, et
- le contour extérieur de chaque palette d'agitation (4, 5) passe à peu près radialement à partir du moyeu (2) avec une zone de bordure avant (13) en ce qui concerne le sens de rotation de l'arbre du moteur et s'étend ensuite dans un arc qui augmente jusqu'à la longueur maximale de la palette d'agitation et de là, passe de nouveau radialement par rapport au moyeu (2) avec une zone de bordure arrière en ce qui concerne le sens de rotation.

3. Agitateur submersible motorisé pour installations de production d'un biogaz selon la revendication 1 ou 2,
**caractérisé en ce que** la surface d'installation de la palette d'agitation est adaptée pour une installation du bord de la pâle inclinée (15) dans la zone de bordure côté moyeu de l'inclinaison de bord.

4. Agitateur submersible motorisé pour installations de production d'un biogaz selon la revendication 1 ou 2,
**caractérisé en ce que** deux tiges de maintien ou segments de tiges de maintien (9, 11) sont disposés les uns à côté des autres avec la distance d'une épaisseur de palette d'agitation, de manière à former ainsi une fente de réception (12) pour un bord de palette d'agitation côté moyeu.
